# EUROPÄISCHE PATENTSCHRIFT

(11) **EP 1 962 360 B1**
(45) Veröffentlichungstag und Bekanntmachung des Hinweises auf die Patenterteilung: **21.07.2010**
(21) Anmeldenummer: 07101794.1
(22) Anmeldetag: 06.02.2007
(51) Int. Cl.: H01M 8/04, H01M 8/06, H01M 8/10, B01D 45/02, B01D 53/22

(54) **Gasabscheider für eine Direktmethanol-Brennstoffzelle (DMFC)**
Gas separating device for a direct methanol fuel cell (DMFC)
Dispositif de séparateur à gaz pour une pile à combustible à méthanol direct (DMFC)

(43) Veröffentlichungstag der Anmeldung: 27.08.2008
(73) Patentinhaber: Samsung SDI Co., Ltd., Suwon-si Gyeonggi-do (KR)
(72) Erfinder: Mergel, Stefan, 40215 Düsseldorf (DE); Larrain, Diego, 10999, Berlin (DE); Bronold, Matthias, 12209, Berlin (DE)
(74) Vertreter: Hengelhaupt, Jürgen

(56) Entgegenhaltungen:
- GB-A- 2 100 859
- US-A- 4 110 220
- US-A1- 2002 192 525
- US-A1- 2003 157 395

## Beschreibung

Die Erfindung betrifft einen Separator zur Trennung eines Gas/Flüssig-Gemisches für eine Direktmethanol-Brennstoffzelle (DMFC).

### Technologischer Hintergrund und Stand der Technik

Eine Brennstoffzelle ist eine galvanische Zelle, die die chemische Reaktionsenergie eines kontinuierlich zugeführten Brennstoffes und eines Oxidationsmittels in elektrische Energie umwandelt. Eine Brennstoffzelle besteht in der Regel aus zwei Elektroden, die durch eine Membran oder einen Elektrolyten voneinander getrennt sind. Die Anode wird mit dem Brennstoff, zum Beispiel Wasserstoff, Methan oder Methanol, umspült und der Brennstoff wird dort oxidiert. Die Kathode wird mit dem Oxidationsmittel umspült, zum Beispiel Sauerstoff, Wasserstoffperoxid oder Kaliumthiocyanat, das an der Elektrode reduziert wird. Die zur Realisation der einzelnen Komponenten verwendeten Materialien sind je nach Brennstoffzellentyp unterschiedlich zu wählen.

Die Direktmethanol-Brennstoffzelle (DMFC; direct methanol fuell cell) ist eine Niedrigtemperatur-Brennstoffzelle, die schon bei Temperaturen im Bereich von ca. 60 - 120°C arbeitet. Als Elektrolyt verwendet dieser Zellentyp eine Polymermembran. Methanol (CH₃OH) wird ohne vorherige Reformierung zusammen mit Wasser direkt der Anode zugeführt und dort oxidiert. An der Anode entsteht als Abgas Kohlendioxid (CO₂). Der Kathode als Oxidationsmittel zugeführte Luftsauerstoff reagiert mit H⁺-Ionen und Elektroden zu Wasser. Der Vorteil der DMFC liegt in der Verwendung eines flüssigen, sehr leicht speicherbaren und überaus billigen Energieträgers, der zum Beispiel in Kunststoffpatronen verbreitet werden kann. Zudem existiert eine weit verzweigte Infrastruktur für Methanol bereits in vielen Bereichen, zum Beispiel durch die Verwendung als Frostschutzzusatz im Scheibenwischerwasser für Kraftfahrzeuge. Dieser Brennstoffzellentyp kann - je nach Auslegung - Leistungen im Bereich von einigen mW bis einigen 100 KW erbringen. DMFCs eignen sich insbesondere für den portablen Einsatz in elektronischen Geräten als Ersatz und Ergänzung zu herkömmlichen Akkumulatoren. Typische Einsatzgebiete liegen in der Telekommunikation und der Energieversorgung von Notebooks.

Die Oxidation des Methanols am Katalysator der Anode erfolgt stufenweise, wobei mehrere Reaktionswege mit unterschiedlichen Zwischenprodukten in der Diskussion stehen. Um die Effizienz der Brennstoffzelle hochzuhalten, ist es erforderlich die Reaktionsprodukte rasch aus der Umgebung der Elektrode zu entfernen. Aufgrund der herrschenden Temperaturen und des zu Grunde liegenden Chemismus entsteht ein Flüssig/Gas-Gemisch aus CO₂, Wasser, Wasserdampf und nicht umgesetzten Methanol. Aus diesem Flüssig/Gas-Gemisch muss das CO₂ abgetrennt werden, um nach Einjustierung der Methanolkonzentration die flüssige Brennstoffmischung erneut der Anode zuzuführen. Die Abtrennung der Gase geschieht mit Hilfe eines CO₂-Separators.

An der Kathode bildet sich aus nicht verbrauchter Luft, Wasser und Wasserdampf ebenfalls ein Flüssig/Gas-Gemisch. Um eine lange Autarkie des Systems zu erreichen, muss ein möglichst großer Teil des Wassers von der Luft abgetrennt und in den Anodenkreislauf zurückgeführt werden. Zu diesem Zweck ist ein Wärmetauscher hinter dem Kathodenausgang der Brennstoffzelle angeordnet, um das Gemisch zu kühlen und so eine Kondensation des Wasserdampfes zu erreichen.

Dem Wärmetauscher nachgelagert ist ein Luftseparator angeordnet, der den Luftstrom vom flüssigen Wasser abtrennt, um das Wasser wieder in den Anodenkreislauf zurück zu führen.

Die Separatoren dienen demnach vornämlich dem Wassermanagement und der Entfernung von CO₂ aus dem Gleichgewicht. Sie werden zumeist als separate Einrichtungen verwirklicht, die mit der eigentlichen Brennstoffzelle jeweils über eine für das Flüssig/Gas-Gemisch gängige Zuleitung verbunden ist. Dieser räumliche Abstand bedingt auch einen Temperaturgradienten und aus dem sich langsam abkühlenden Flüssig/Gas-Gemisch kondensiert Wasser aus. Herkömmliche Separatoren trennen das Phasengemisch aus flüssigen und gas- beziehungsweise dampfförmigen Komponenten, wobei die gas- beziehungsweise dampfförmigen Komponenten an die Umgebung abgegeben werden. Auch die vorliegende Erfindung setzt hier an.

Bekannt ist, einen Separator zur Trennung des Flüssig/Gas-Gemisches mit einer porösen Membran auszustatten. Die poröse Membran ist mit ihrer Innenseite dem Flüssig/Gas-Gemisch zugewandt und ihre Außenseite steht mit der Umgebung in Kontakt. Weiterhin sind derartige Membranen in der Regel mit hydrophoben Materialien beschichtet oder bestehen aus diesen. Von der Innenseite der Membran erstrecken sich Diffusionskanäle zur Außenseite, die so dimensioniert sind, dass an der Innenseite befindliches (flüssiges) Wasser nicht eindringen, jedoch Gas nach Außen diffundieren kann.

Bei den Separatoren des Standes der Technik wird das Flüssig/Gas-Gemisch in einen Hohlraum verbracht, der an die gaspermeable Membran grenzt. Ein Volumen des Hohlraums und eine relative Lage der Membran richten sich nach der Orientierung des Separators im Betrieb und den zu erwartenden Volumina an Flüssig/Gas-Gemisch. Das Volumen des Hohlraums wird so vorgegeben, dass sich das Flüssig/Gas-Gemisch nach Eintritt in den Hohlraum in eine Gas- und Flüssigphase separieren kann und diese dann über das gesamte Volumen des Hohlraums voneinander getrennt vorliegen. Die Membran wird so angeordnet, dass sie an eine Oberseite des Hohlraums grenzt, die im geregelten Betrieb mit der Gasphase in Kontakt steht. An der Unterseite wird die Flüssigphase abgeführt. Eine hinreichende Funktionalität derartiger Separatoren ist jedoch nur dann gewahrt, wenn die Ausrichtung des Separators im Raum beachtet wird. Der Separator darf allenfalls um wenige Grade aus seiner aufrechten Position verschwenkt werden, damit die Gasphase weiterhin an der Membran anliegt. Gerade für den mobilen Einsatz von Brennstoffzellen ist dieser Umstand jedoch limitierend.

US 2002/0192525 A1 beschreibt einen CO₂-Separator für eine DMFC, der unabhängig von einer Raumorientierung des Separators arbeitet. Über einen Einlass des Separators tritt das anodische Abgas der DMFC in einen Kanal ein, dessen Ausflussöffnung ausgelegt ist einen Druck in Folge des Eintritts des Abgases aufzubauen. Der Kanal hat poröse und hydrophobe Wandungen, die für CO₂ durchlässig sind. Der beschriebene CO₂-Separator kann unabhängig von seiner räumlichen Lage betrieben werden.

### Zusammenfassung der Erfindung

Der Erfindung liegt die Aufgabe zu Grunde, die geschilderten Nachteile des Standes der Technik zu überwinden. Insbesondere soll ein unabhängig von seiner räumlichen Lage arbeitender Separator bereitgestellt werden, der für die Abtrennung der Luft vom Kathodenwasser und/oder für die Abtrennung des CO₂ aus dem Anodenkreislauf einsetzbar ist und in möglichst kompakter und robuster Bauweise zu verwirklichen ist.

Diese Aufgabe wird mit Hilfe des erfindungsgemäßen Separators zur Trennung eines Gas/Flüssig-Gemisches für eine Direktmethanol-Brennstoffzelle (DMFC) gelöst. Der erfindungsgemäße Separator hat einen geschlossenen Kanal mit wenigstens einem Kanalabschnitt, dessen Wandung ganz oder in Teilen aus einer hydrophoben, gasdurchlässigen Membran besteht, wobei sich eine Querschnittsfläche des Kanals ausgehend von einer Eingangsöffnung bis zu einer Ausgangsöffnung kontinuierlich oder stufenweise verringert, und bei dem die nicht aus der Membran bestehenden Teilabschnitte der Wandung des Kanals durch einen einstückigen, insbesondere massiv ausgeführten Formkörper vorgegeben sind. Mit Hilfe des erfindungsgemäßen Separators ist die Trennung von Flüssig/Gas-Gemischen bei beliebiger Raumorientierung des Separators möglich. Der Separator zeichnet sich insbesondere durch seine robuste und kompakte Bauweise ab und lässt sich aufgrund des gewählten Aufbaus besonders günstig im industriellen Maßstab produzieren.

Der Erfindung liegt unter anderem die Erkenntnis zu Grunde, dass die Durchführung des Gas/Flüssig-Gemisches durch einen sich verjüngenden Kanal, dessen Wandung zumindest abschnittsweise ganz oder in Teilen durch die Membran vorgegeben ist, eine Trennung der Gas- und Flüssigphase in beliebiger Orientierung des Separators ermöglicht. Das Gas/Flüssig-Gemisch tritt über die Eingangsöffnung in den Kanal ein. Durch die Verjüngung des Kanals hin zur Ausgangsöffnung baut sich ein Druck auf, der die Separation der Phasen unterstützt. Auf dem Weg von der Eintrittsöffnung hin zur Ausgangsöffnung wird das Gas/Flüssig-Gemisch an den Kanalabschnitten, deren Wandung aus der Membran besteht, vorbeigeführt und in diesen Kanalabschnitten diffundiert die gasförmige Komponente des Gemisches durch die Membran nach Außen und wird abgeführt. Weiterhin kühlt sich das Gas/Flüssig-Gemisch auf dem Weg von der Eingangsöffnung zur Ausgangsöffnung weiter ab, so dass die damit eintretenden Kondensationsprozesse den Anteil von Wasser und Methanol in der Gasphase weiter mindern. Mit zunehmender Wegstrecke erhöht sich also kontinuierlich der Flüssiganteil des Gas/Flüssig-Gemisches im Kanal bis letztendlich nur noch oder weit überwiegend die flüssige Komponente an der Ausgangsöffnung verbleibt. Vorzugsweise verringert sich die Querschnittsfläche des Kanals von der Eingangsöffnung bis zur Ausgangsöffnung um einen Faktor im Bereich von 2 bis 40.

Die nicht aus der Membran bestehenden Teilabschnitte der Wandung des Kanals werden durch den einstückigen, insbesondere massiv ausgeführten Formkörper vorgegeben. Hierdurch wird dem Separator die für den herkömmlichen Betrieb und insbesondere mobilen Einsatz notwendige mechanische Stabilität verliehen und die Bereitstellung und Herstellung des Kanals ist in einfacher Weise mit Hilfe dieses Formkörpers im industriellen Maßstab umsetzbar. Der Formkörper ist in der Regel massiv ausgeführt und kann aus Kunststoff bestehen. Bevorzugt ist er aus einem thermisch leitenden Werkstoff, z.B. einem Metall oder einem kohlenstoffbasierten Material gefertigt, so dass die gute Wärmeleitfähigkeit des Werkstoffs zur unterstützenden Kühlung des Separators nutzbar ist. Die Dimension und Geometrie des Formkörpers ist dem Kanal als auch dem zur Verfügung stehenden Bauraum für den Separator anzupassen.

Der vorgenannte Formkörper weist weiterhin an seiner Oberfläche eine längliche Vertiefung auf und die Membran ist über die Vertiefung gespannt, um den Kanal auszubilden. Mit anderen Worten, die Oberseite des vorzugsweise flächigen Formkörpers ist konturiert und durch das Fixieren der Membran an dieser Oberfläche entsteht die erfindungsgemäß notwendige kanalartige Struktur.

Die vorgenannte Vertiefung weist eine serpentinenartige Kontur auf. Die Vertiefung hat eine serpentinenartige Kontur mit parallel geführten Kanalabschnitten, die durch Stege voneinander beabstandet sind, und die Membran ist über die Vertiefung als auch die Stege gespannt, so dass eine erste Teilfläche der Membran, die über der Vertiefung (dem Kanal) liegt, größer als eine zweite Teilfläche der Membran, die über den Stegen liegt. Auf diese Weise wird ein günstiges Verhältnis der für die Gasseparation zur Verfügung stehenden Membranfläche zur gesamten Membranfläche erreicht werden.

Weiterhin ist bevorzugt, wenn die Membran durch einen flächigen Spannkörper auf der Oberfläche des Formkörpers fixiert ist. Mit anderen Worten, der Spannkörper liegt an der Oberfläche des Formkörpers an, in die die Vertiefung eingebracht ist, die letztendlich den zu erstellenden Kanal bilden soll. Die Membran liegt fest zwischen dem Spannkörper und dem Formkörper. Eine Formgebung des Spannkörpers ist natürlich derart vorzugeben, dass die aus dem Gas/Flüssig-Gemisch zu trennende gasförmige Komponente noch durch die Membran diffundieren und nach dem Durchtritt abgeführt werden kann.

Vorzugsweise weist der vorgenannte Spannkörper einen länglichen Spalt auf, dessen Lage und Form so vorgegeben ist, dass der Spalt im fixierten Zustand der länglichen Vertiefung des Formkörpers gegenüber liegt. Mit anderen Worten, nach dieser Variante folgt der Spalt der Kontur des darunter liegenden Kanals.

Der Spannkörper kann eine Dicke im Bereich von 0,1 bis 3 mm aufweisen. Unterhalb der genannten Bereichsgrenze ist die mechanische Abstützung der Membran durch den Spannkörper in der Regel für den herkömmlichen Betrieb unzureichend und mit zunehmender Betriebsdauer des Separators drohen Ausfälle. Oberhalb der genannten Bereichsgrenze besteht die Gefahr der Kondensation von Luftfeuchtigkeit an der Wandung des Spaltes, so dass mit zunehmender Betriebsdauer die Luftzirkulation an der Außenseite der Membran behindert wäre. In besonders einfach zu realisierenden Ausführung sind sowohl Formkörper als auch Spannkörper von flächiger, quaderförmiger Kontur und zwischen der konturierten Flachseite des Formkörpers und der Flachseite des darauf liegenden Spannkörpers liegt die Membran.

Eine Dimensionierung des Kanals hängt von mehreren Faktoren ab. Zum Einen muss sicher gestellt sein, dass das eintretende Gas/Flüssig-Gemisch sich nicht vollständig über die gesamte Länge der Kanalabschnitte, in dem die Membran angeordnet ist, in einen oberen und unteren Bereich trennt. Mit anderen Worten, der Kanal sollte so dimensioniert sein, dass sich zumindest in den Kanalabschnitten mit der Membran in Längsrichtung gasförmige und flüssige Phasen abwechseln. So liegt die gasförmige Komponente des Gas/Flüssig-Gemisches beispielsweise in Form von Gasblasen im Kanal vor, die in Richtung der Ausgangsöffnung gefördert werden und sich jeweils räumlich über die gesamte Querschnittsfläche des Kanalabschnitts erstrecken, in dem sie sich befinden.

Zum Anderen hängt die Dimensionierung von den Betriebsparametern der anzuschließenden Brennstoffzelle ab, dass heißt, der Größenordnung der zu erwartenden Volumina an Gas/Flüssig-Gemisch. Natürlich können große Volumina auch durch ein Aufteilen des Volumenstroms auf eine Vielzahl erfindungsgemäßer Separatoren bewältigt werden.

Vorzugsweise beträgt die Querschnittsfläche des Kanals an der Eingangsöffnung mindestens 1 mm², um den Druckverlust im Kanal zu begrenzen. Vorzugsweise beträgt die Querschnittsfläche maximal 100 mm² bei einer maximalen Höhe des Kanals von 10 mm. Auf diese Weise wird erreicht, dass sich Gasblasen und Flüssigkeitsbereiche nacheinander durch den Kanal bewegen, sodass in allen Orientierungen die Gasblasen in Kontakt mit der Membran sind.

Die Membran muss aus einem gasdurchlässigen und hydrophoben Material bestehen. Für diese Zwecke kommen insbesondere fluorierte Polymere in Frage, die den aggressiven Medien der Brennstoffzelle dauerhaft standhalten können. Vorzugsweise besteht die Membran aus Polytetrafluorethylen (PTFE).

Der Separator ist vorzugsweise als Luftseparator einer Direktmethanol-Brennstoffzelle (DMFC) für einen tragbaren Computer (Laptop) ausgelegt. Eine Gesamtfläche der Abschnitte der Membran, die für die Permeation zur Verfügung stehen, liegt vorzugsweise im Bereich von 8 bis 60 cm². Unabhängig oder ergänzend zu der vorangehenden bevorzugten Ausführungsform des Luftseparators beträgt eine Tiefe des Kanals im Bereich der Eingangsöffnung vorzugsweise 2 bis 6 mm. Unabhängig oder ergänzend zu einer der vorangehenden bevorzugten Ausführungsformen des Luftseparators beträgt die Querschnittfläche des Kanals an der Eingangsöffnung 4 bis 40 mm². Unabhängig oder ergänzend zu einer der vorangehenden bevorzugten Ausführungsformen des Luftseparators beträgt die Querschnittsfläche des Kanals an der Ausgangsöffnung 0,01 bis 10 mm², besonders bevorzugt 0,05 bis 1 mm², um einen ausreichenden Staudruck zu erzeugen und die Luft durch die Membran zu drücken jedoch den im System befindlichen Luftkompressor nicht zu überlasten. Schließlich kann unabhängig oder ergänzend zu einer der vorangehenden bevorzugten Ausführungsformen des Luftseparators ein Verhältnis der Querschnittsflächen an Eingangsöffnung und Ausgangsöffnung im Bereich von 2:1 bis 20:1 liegen. Das hier im Detail ausgeführte Prinzip eines Luftseparators kann in gleicher Weise, aber dann unterschiedlichen Dimensionierungen auch für einen CO₂-Separator einer Direktmethanol-Brennstoffzelle (DMFC) für einen tragbaren Computer (Laptop) angewendet werden.

### Kurzbeschreibung der Zeichnungen

Nachfolgend wird die Erfindung anhand eines Ausführungsbeispiels und den dazugehörigen Zeichnungen näher erläutert. Es zeigen:
- Figur 1: eine DMFC im schematischen Aufbau;
- Figur 2: eine schematische Schnittansicht durch einen herkömmlichen Separator der DMFC;
- Figur 3: eine Draufsicht auf einen erfindungsgemäßen Separator der DMFC;
- Figur 4: eine Draufsicht auf einen zum Separator der Fig. 3 gehörigen Formkörper;
- Figur 5: eine Schnittdarstellung durch den Separator der Fig. 3 entlang der Linie B-B;
- Figur 6: eine weitere Schnittdarstellung durch den Separator der Fig. 3 entlang der Linie A-A;
- Figur 7: eine schematische Schnittansicht zur Illustration einer alternativen Formgebung eines Kanals des Separators;
- Figur 8: eine schematische Schnittansicht zur Illustration einer weiteren alternativen Formgebung des Kanals des Separators; und
- Figur 9: eine schematische Schnittansicht zur Illustration einer weiteren alternativen Formgebung des Kanals des Separators.

### Detaillierte Beschreibung der Erfindung

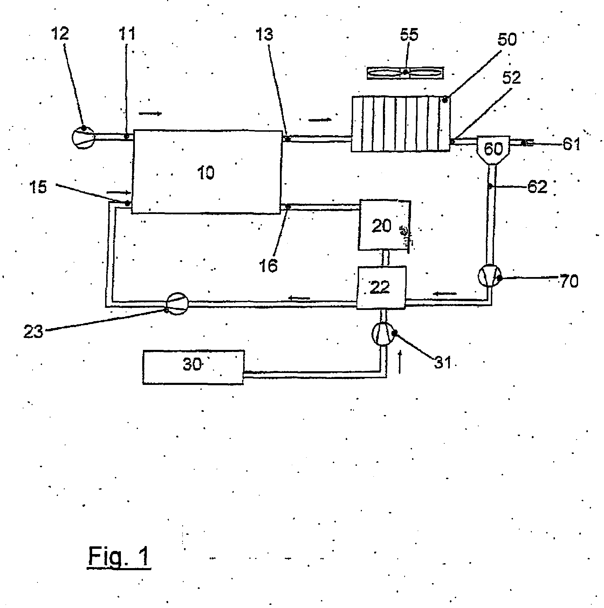

Figur 1 dient der Illustration des Aufbaus einer Direktmethanol-Brennstoffzelle (DMFC). Im Brennstoffzellenstapel 10 findet - der für die Zwecke der Erfindung nicht näher zu erläuternde - elektrochemische Vorgang statt, dessen Reaktionsprodukt anodenseitig ein CO₂ und wasserhaltiges Flüssig/Gas-Gemisch ist.

Über eine kathodenseitige Einlassöffnung 11 wird mit Hilfe einer Pumpe 12 dem Stapel 10 Luft zugeführt. Aus der kathodenseitigen Ausgangsöffnung 13 des Stapels 10 kann die eingeleitete Luft wieder entweichen und wird mittels eines Wärmeaustauschers 50 mit zugeordnetem Belüfter 55 abgekühlt. Die abgekühlte Luft beziehungsweise aus dieser auskondensierte Flüssigkeit verlassen den Wärmeaustauscher 50 durch eine Ausgangsöffnung 52 und werden einem Luftseparator 60 zugeführt. Dieser steht über entsprechende Leitungen mit einem Auslassventil 61 und über eine mit einer Pumpe 70 verbundene Leitung 62 mit einem Mischer 22 in Verbindung. Anodenseitig wird mittels einer Pumpe 23 über eine Einlassöffnung 15 das sich im Mischer 22 befindliche Gemisch dem Brennstoffzellenstapel 10 zugeführt. Weiterhin wird über einen Brennstofftank 30 und ein entsprechendes Ventil 31 Brennstoff, also Methanol, dem Mischer 22 zugeführt. Der Brennstoffzellenstapel 10 hat schließlich eine anodenseitige Auslassöffnung 16, die über eine Leitung in einen CO₂-Separator 20 mündet. Der Separator 20 weist eine Membran auf, die zur Trennung des Flüssig/Gas-Gemisches dient.

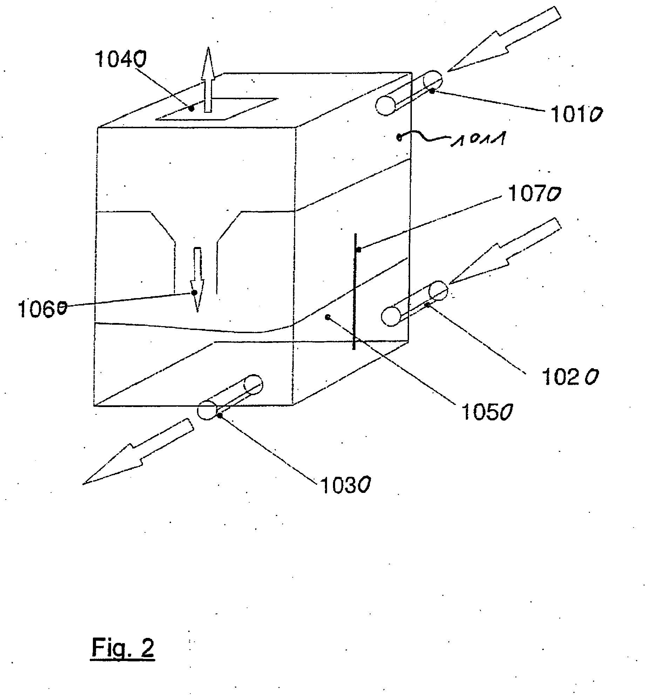

Fig. 2 dient der Illustration der Funktionsweise eines herkömmlichen Separators, sei er als Luft- oder wie vorliegend als CO₂-Separator ausgeführt. Der schematischen Schnittskizze ist eine Einlassöffnung 1010 für das Gas/Flüssig-Gemisch der Brennstoffzelle zu entnehmen. Das zugeführte Gas/Flüssig-Gemisch trennt sich nach dem Eintritt in einen Hohlraum 1011 in seine gasförmige und flüssige Komponente. Über eine Auslassöffnung 1040 an der Oberseite, die in der Regel mit einer gasdurchlässigen Membran bewehrt ist, kann die gasförmige Komponente abgeführt werden. Die flüssige Komponente wird dagegen über eine bodenseitig angeordnete Auslassöffnung 1060 einem Mischer 1050 zugeführt. In den Mischer mündet ferner eine Brennstoffleitung 1020 zum Eintrag des Methanols und das entstehende Gemisch wird über eine Leitung 1030 der Brennstoffzelle zugeführt. Eine Füllstandshöhe der flüssigen Komponente im Hohlraum 1011 kann mittels eines geeigneten Sensors 1070 erfasst werden. Der hier nur schematisch umrissene Separator des Standes der Technik agiert demnach nach dem einfach zu verwirklichenden Schwerkraftsprinzip, hat jedoch dadurch den Nachteil, dass seine Funktionalität von der Orientierung des Separators im Raum abhängt.

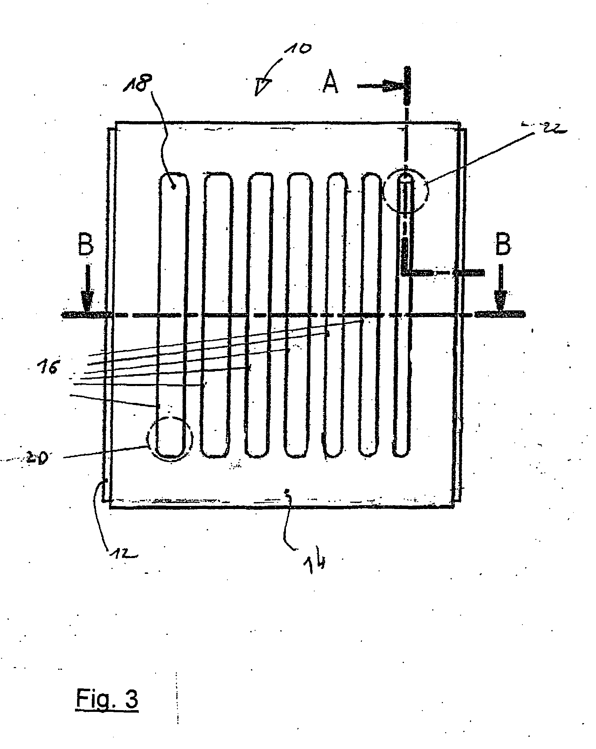

Fig. 3 zeigt eine Draufsicht auf einen erfindungsgemäßen Separator 10 der DMFC, der als Luft- und/oder CO₂-Separator Anwendung findet. Die schematische Darstellung beschränkt sich auf die Darstellung der erfindungswesentlichen Komponenten in einer Ausführungsform der Erfindung. Der in Fig. 3 in Frontalansicht dargestellte Separator 10 besitzt eine flächige Kontur und die gewählte Perspektive gewährt einen Blick auf die funktionelle modifizierte Seite des Separators 10, über die die gasförmige Komponente des zu trennenden Gas/Flüssig-Gemisches aus dem Separator 10 austritt und abgeführt wird.

Der Separator 10 ist zweigliedrig aufgebaut; auf einem massiven und einstückigen Formkörper 12, dessen Aufbau weiter unten noch näher erläutert wird, liegt ein sogenannter Spannkörper 14. Der Spannkörper 14 weist an seiner Oberseite eine Vielzahl von Spalten 16 auf, die etwa gleich weit voneinander beabstandet sind und deren Spaltbreite von links nach rechts abnimmt. Die relative Lage der Spalten 16 und deren Funktionalität werden weiter unten noch näher erläutert.

Zwischen dem Formkörper 12 und dem Spannkörper 14 liegt eine Membran 18, die hier nur in dem Bereich von den Spalten 16 freigegebenen Bereichen zu erkennen ist. Die Spalten 16 erstrecken sich demnach in der Tiefe durch den gesamten Spannkörper 14. Die umlaufenden Seiten zwischen Formkörper 12 und Spannkörper 14 werden auf geeignete Weise für das zu trennende Gas/Flüssig-Gemisch abgedichtet. Die kreisförmig hervorgehobenen Bereiche dienen der Illustration der Lage der noch näher erläuterten Eingangs- und Ausgangsöffnungen 20, 22 eines Kanals 24 (hier nicht zu sehen).

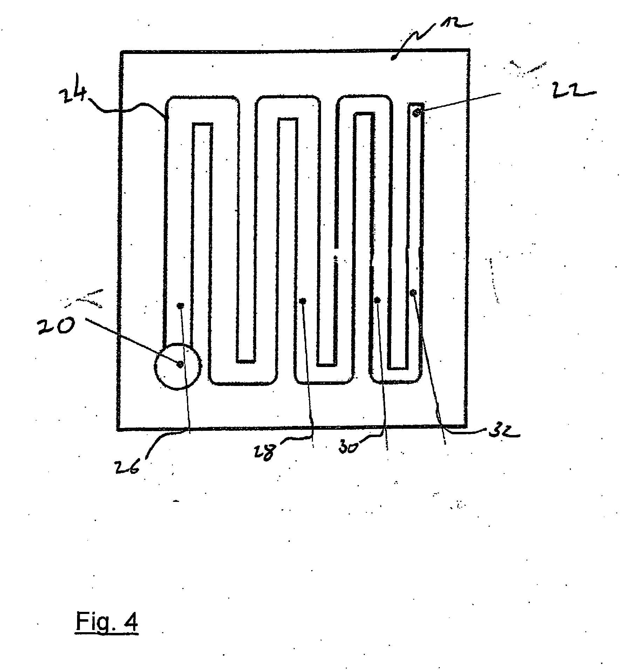

Der Fig. 4 ist eine Draufsicht auf den Formkörper 12 des Separators 10 aus Fig. 3 zu entnehmen. Der Formkörper 12 kann beispielsweise aus rostfreiem Stahl gefertigt sein und an seiner Rückseite kann gegebenenfalls eine Kühlung angebracht werden, die eine Temperierung des zu trennenden Gas/Flüssig-Gemisches erlaubt. Alternativ kann er aus einem ebenfalls thermisch leitenden Kohlenstoffmaterial oder einem einfach form- und verarbeitbaren Kunststoffmaterial bestehen. Der Formkörper 12 zeigt an seiner Oberseite eine serpentinenartige Vertiefung, die nach dem Aufspannen der Membran 18 den Kanal 24 ausbildet. Da sich diesem Beispiel zufolge die Dimensionierung des Kanals 24 wesentlich durch die Geometrie der Vertiefung ergibt, wird nachfolgend der Einfachheit halber die Kontur bereits als Kanal 24 bezeichnet.

Wie ersichtlich erstreckt sich der Kanal 24 serpentinenartig über die Oberfläche des Formkörpers 12 bis hin zur Ausgangsöffnung 22. Dabei verjüngt sich der Kanal 24 zunehmend und zwar in mehreren Stufen: den Kanalabschnitten 26, 28, 30 und 32. Ausgehend vom ersten Kanalabschnitt 26 nimmt sukzessive eine Querschnittsfläche des Kanals 24 über dem zweiten Kanalabschnitt 28, dem dritten Kanalabschnitt 30 bis hin zum vierten Kanalabschnitt 32 ab. Eine Gesamtlänge des Kanals 24 beträgt etwa 300 mm.

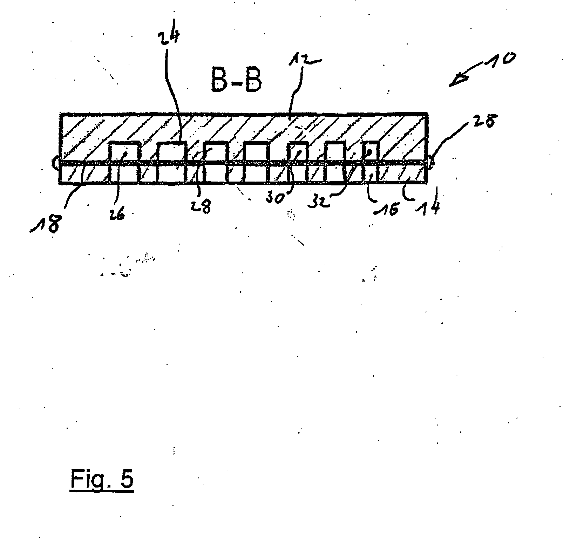

Fig. 5 ist ein Schnitt entlang der Linie B-B durch den Separator 10 der Fig. 3 zu entnehmen. Wie ersichtlich, ist die Membran 18 zwischen dem Formkörper 12 und dem Spannkörper 14 angeordnet. Der Kanal 24 mit seinen Kanalabschnitten 26, 28, 30 und 32 ist demnach räumlich durch die Membran 18 von den Spalten 16 des Spannkörpers 14 abgegrenzt. Durch die Membran 18 können die gasförmigen Komponenten des in dem Kanal 24 befindlichen Gas-/Flüssig-Gemisches in die Spalten 16 gelangen und von dort nach Außen in die Umgebung abgeführt werden. Eine Dichtung (oder Klebenaht) 28 verhindert das seitliche Austreten gasförmiger Komponenten bzw. des Gas-/Flüssig-Gemisches aus dem Separator 10.

In dem hier dargestellten Separator 10 weist der Spannkörper 14 eine Dicke von ca. einen Millimeter auf, so dass die Spalten 16 dementsprechend eine Tiefe von maximal einen Millimeter haben.

Der erste Kanalabschnitt 26 besitzt eine Querschnittsfläche von etwa 15 mm². Die Querschnittsfläche verjüngt sich hin zum vierten Kanalabschnitt 32 auf etwa 5 mm².

Mit anderen Worten, von der Eingangsöffnung 20, die die gleiche Querschnittsfläche wie der erste Kanalabschnitt 26 aufweist, bis hin zur Ausgangsöffnung 22, die die gleiche Querschnittsfläche wie der vierte Kanalabschnitt 32 aufweist, verringert sich die Querschnittsfläche des Kanals um den Faktor 2.

Ein Verhältnis der Gesamtfläche des Teils der Wandung im ersten Kanalabschnitt 26, der durch die Membran 18 vorgegeben ist, zu der Gesamtfläche der verbleibenden Teile der Wandung des Kanals 24 in diesem ersten Kanalabschnitt 26, also den Teilen der Wandung, die durch den Formkörper 12 definiert sind, beträgt 1:3. Im vierten Kanalabschnitt 32 beträgt dieses Verhältnis 1:4.

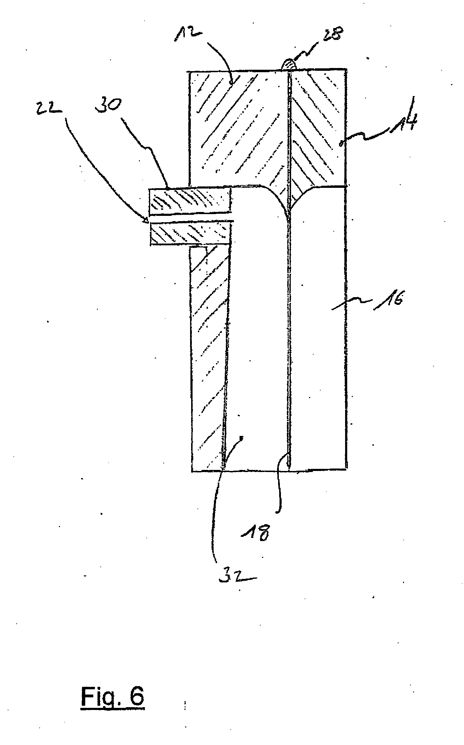

Fig. 6 ist ein Schnitt entlang der Linie A-A der Fig. 3 zu entnehmen. Wie ersichtlich, mündet der vierte Kanalabschnitt 32 des Kanals 24 in ein an der Rückseite des Formkörpers 12 eingelassenes Ventil 30. Die Querschnittsfläche an der Ausgangsöffnung 22 des Ventils 30 stellt damit den Endpunkt des Kanals 24 dar und beträgt etwa 0,5 mm² (die Zeichnung dient nur zum Zwecke der Illustration und ist nicht maßstabsgetreu).

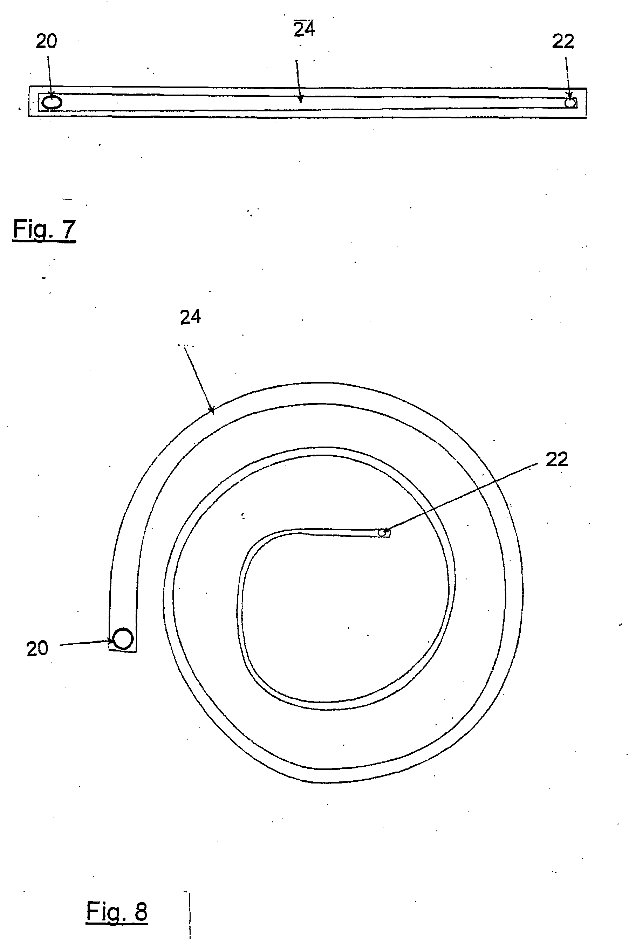

Den Fig. 7 und 8 sind Kanäle 24 in zwei alternativen Formgebungen zu entnehmen. Nach der Alternative der Fig. 7 ist der Kanal 24 von linearer Geometrie und verjüngt sich kontinuierlich. Fig. 8 zeigt einen spiralförmigen Kanal 24, der sich ebenfalls kontinuierlich verjüngt.

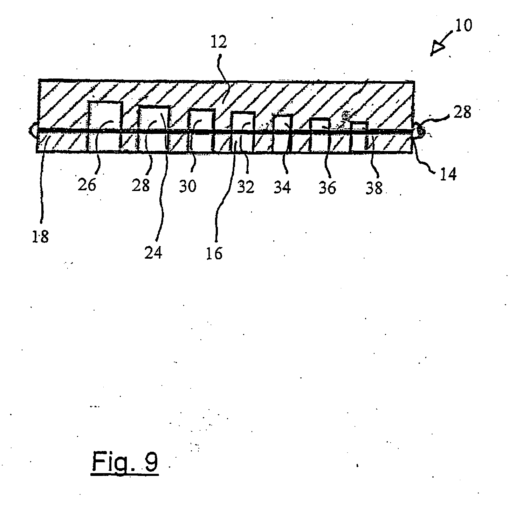

In Fig. 9 ist eine weitere alternative Ausführungsform des erfindungsgemäßen Separators dargestellt. In diesem Fall verringert sich abschnittsweise die Höhe der Kanalabschnitte 26, 28, 30, 32, 34, 36, 38 des Kanals 24 von der Eingangsöffnung 20 zur Ausgangsöffnung 22. Durch diese Ausführungsform kann die Verringerung des Kanalquerschnitts stärker ausgeprägt werden, um ggf. die Staudruckbedingungen zu optimieren.

Infolge der sich kontinuierlich oder stufenweise verringernden Querschnittsfläche des Kanals in den Separatoren gemäß der Erfindung baut sich im Betrieb ein Überdruck im Inneren des Kanals gegenüber der umgebenden Normalatmosphäre auf. Der Druckgradient unterstützt die Diffusion der gasförmigen Komponente durch die Membran. Weiterhin wird das Gas-/Flüssig-Gemisch von der Eingangsöffnung aus kontinuierlich zur Ausgangsöffnung des Kanals gefördert und kühlt währenddessen weiter ab. In der Folge kondensiert Wasser aus der Gasphase. Gleichzeitig diffundiert die gasförmige Komponente durch die Membran, so dass mit zunehmender Weglänge der Anteil der Flüssigphase immer weiter ansteigt, bis letztendlich an der Ausgangsöffnung ganz überwiegend oder nur noch die flüssige Komponente zu finden ist. Da die Formgebung und Dimensionierung des Kanals bedingt, dass sich die Gase im Kanal in Form von Luftblasen bewegen und diese in beliebiger geometrischer Lage des Separators immer auch an der Membran liegen, stehen entsprechend auch alle Freiheitsgrade für Orientierung des Separators im Betrieb zur Verfügung. Das Trennen des Phasengemisches ist damit unabhängig von der räumlichen Lage des Separators.

## Patentansprüche

1. Separator (10) zur Trennung eines Gas/Flüssig-Gemisches für eine Direktmethanol-Brennstoffzelle (DMFC) mit einem geschlossenen Kanal (24) mit wenigstens einem Kanalabschnitt (26, 28, 30, 32, 34, 36, 38), dessen Wandung ganz oder in Teilen aus einer hydrophoben, gasdurchlässigen Membran (18) besteht, wobei sich eine Querschnittsfläche des Kanals (24) ausgehend von einer Eingangsöffnung (20) bis zu einer Ausgangsöffnung (22) kontinuierlich oder stufenweise verringert, **dadurch gekennzeichnet, dass** bei dem die nicht aus der Membran (18) bestehenden Teilabschnitte der Wandung des Kanals (24) durch einen einstückigen Formkörper (12) vorgegeben sind, der Formkörper (12) an seiner Oberfläche eine längliche Vertiefung aufweist und die Membran (18) über die Vertiefung gespannt ist, um den Kanal (24) auszubilden, wobei die Vertiefung eine serpentinenartige Kontur mit parallel geführten Kanalabschnitten (26, 28, 30, 32, 34, 36, 38) besitzt, die durch Stege voneinander beabstandet sind, und die Membran (18) über die Vertiefung als auch die Stege gespannt ist, so dass eine erste Teilfläche der Membran (18), die über der Vertiefung liegt, größer ist als eine zweite Teilfläche der Membran (18), die über den Stegen liegt.

2. Separator (10) nach Anspruch 1, bei dem der Formkörper (12) aus einem thermisch leitenden Werkstoff hergestellt ist.

3. Separator (10) nach Anspruch 1, bei dem die Membran (18) durch einen flächigen Spannkörper (14) auf der der Oberfläche des Formkörpers (12) fixiert ist.

4. Separator (10) nach Anspruch 3, bei dem der Spannkörper (14) einen länglichen Spalt (16) aufweist, dessen Lage und Form so vorgegeben ist, dass der Spalt (16) im fixierten Zustand der länglichen Vertiefung des Formkörpers (12) gegenüber liegt.

5. Separator (10) nach Anspruch 4, bei dem der Spannkörper (14) eine Dicke im Bereich 0,1 bis 3 mm aufweist.

6. Separator (10) nach Anspruch 1, bei dem sich die Querschnittfläche des Kanals (24) von der Eingangsöffnung (20) bis zur Ausgangsöffnung (22) um einen Faktor im Bereich von 2 bis 40 verringert.

7. Separator (10) nach Anspruch 1, bei dem die Querschnittfläche des Kanals (24) an der Eingangsöffnung (20) mindestens 1 mm² beträgt.

8. Separator (10) nach einem der vorhergehenden Ansprüche, bei dem die Querschnittfläche des Kanals (24) an der Eingangsöffnung (20) maximal 100 mm² bei einer maximalen Höhe des Kanals (24) von 10 mm beträgt.

9. Separator (10) nach Anspruch 1, bei dem die Membran (18) aus Polytetrafluorethylen (PTFE) besteht.

10. Separator (10) nach einem der vorhergehenden Ansprüche, wobei eine Gesamtfläche der Abschnitte der Membran (18), die für die Permeation zur Verfügung stehen, im Bereich von 8 bis 60 cm² liegt.

11. Separator (10) nach einem der vorhergehenden Ansprüche, bei dem eine Tiefe des Kanals (24) im Bereich der Eingangsöffnung (20) 2 bis 6 mm beträgt.

12. Separator (10) nach einem der vorhergehenden Ansprüche, bei dem die Querschnittfläche des Kanals (24) an der Eingangsöffnung (20) 4 bis 40 mm² beträgt.

13. Separator (10) nach einem der vorhergehenden Ansprüche, bei dem die Querschnittsfläche des Kanals (24) an der Ausgangsöffnung (22) 0,01 bis 10 mm² beträgt.

14. Separator (10) nach Anspruch 13, bei dem die Querschnittsfläche des Kanals an der Ausgangsöffnung (22) 0,05 bis 1 mm² beträgt.

15. Separator (10) nach einem der vorhergehenden Ansprüche, bei dem ein Verhältnis der Querschnittsflächen an Eingangsöffnung und Ausgangsöffnung im Bereich von 2:1 bis 20:1 liegt.

16. Direktmethanol-Brennstoffzelle (DMFC) mit einem Separator nach einem der Ansprüche 1 bis 15.

17. Tragbarer Computer mit einer Direktmethanol-Brennstoffzelle (DMFC), die einen Separator (10) nach einem der Ansprüche 1 bis 15 enthält.

18. Verwendung eines Separators (10) nach einem der Ansprüche 1 bis 15 als Luftseparator in einer Direktmethanol-Brennstoffzelle (DMFC) für einen tragbaren Computer.

## Claims

1. Separator (10) for separating a gas/liquid mixture for a direct methanol fuel cell (DMFC) with a closed canal (24) with at least one canal section (26, 28, 30, 32, 34, 36, 38) whose wall in part or in whole consists of a hydrophobic, gas-permeable membrane (18), wherein a cross-sectional area of the canal (24) decreases continually or stepwise from an inlet opening (20) to an outlet opening (22), **characterized in that** the portions of the wall of the canal (24) not consisting of the membrane (18) are determined by an integral form body (12), the form body (12) has an elongated indentation on its surface and the membrane (18) is clamped over the indentation to form the canal (24); wherein the indentation has a serpentine-like contour with parallel canal sections (26, 28, 30, 32, 34, 36, 38) spaced apart from each other by bridges and the membrane (18) is clamped over the indentation as well as the bridges, so that a first partial area of the membrane (18) disposed over the indentation is larger than a second partial area of the membrane (18) disposed over the bridges.

2. Separator (10) according to claim 1, wherein the form body (12) is made of a thermally conductive material.

3. Separator (10) according to claim 1, wherein the membrane (18) is fixed on the surface of the form body (12) by a flat clamping body (14).

4. Separator (10) according to claim 3, wherein the clamping body (14) has an elongated gap (16) whose position and form are disposed such that the gap (16) is located opposite the elongated indentation of the form body (12) in the fixed state.

5. Separator (10) according to claim 4, wherein the clamping body (14) has a thickness in the range of 0.1 to 3 mm.

6. Separator (10) according to claim 1, wherein the cross-sectional area of the canal (24) decreases by a factor in the range of 2 to 40 from the inlet opening (20) to the outlet opening (22).

7. Separator (10) according to claim 1, wherein the cross-sectional area of the canal (24) at the inlet opening (20) is at least 1 mm².

8. Separator (10) according to one of the previous claims, wherein the cross-sectional area of the canal (24) at the inlet opening (20) is a maximum of 100 mm² at a maximum height of the canal (24) of 10 mm.

9. Separator (10) according to claim 1, wherein the membrane (18) consists of polytetrafluoroethylene (PTFE).

10. Separator (10) according to one of the previous claims, wherein a total area of the sections of the membrane (18) available for the permeation lies in the range of 8 to 60 cm².

11. Separator (10) according to one of the previous claims, wherein a depth of the canal (24) around the inlet opening (20) is 2 to 6 mm.

12. Separator (10) according to one of the previous claims, wherein the cross-sectional area of the canal (24) at the inlet opening (20) is 4 to 40 mm².

13. Separator (10) according to one of the previous claims, wherein the cross-sectional area of the canal (24) at the outlet opening (22) is 0.01 to 10 mm².

14. Separator (10) according to claim 13, wherein the cross-sectional area of the canal at the outlet opening (22) is 0.05 to 1 mm².

15. Separator (10) according to one of the previous claims, wherein a ratio of the cross-sectional areas at the inlet opening and outlet opening lies in the range of 2:1 to 20:1.

16. Direct methanol fuel cell (DMFC) with a separator according to one of claims 1 to 15.

17. Portable computer with a direct methanol fuel cell (DMFC) containing a separator (10) according to one of claims 1 to 15.

18. Use of a separator (10) according to one of claims 1 to 15 as an air separator in a direct methanol fuel cell (DMFC) for a portable computer.

## Revendications

1. Séparateur (10) pour séparer un mélange gaz/liquide pour une cellule de combustible à méthanol direct (DMFC) comprenant un canal (24) fermé avec au moins une partie de canal (26, 28, 30, 32, 34, 36, 38), dont la paroi est constituée complètement ou en partie d'une membrane (18) hydrophobe, perméable aux gaz, une surface de section du canal (24) se réduisant à partir d'une ouverture d'entrée (20) jusqu'à une ouverture de sortie (22) de façon continue ou progressivement, **caractérisé en ce que** les tronçons, non constitués de la membrane (18), de la paroi du canal (24) sont prédéfinis par un corps moulé (12) d'une seule pièce, le corps moulé (12) présente une cavité allongée sur sa surface et la membrane (18) est tendue sur la cavité, afin de réaliser le canal (24), la cavité présentant un contour en forme de serpentin avec des parties de canal (26, 28, 30, 32, 34, 36, 38) guidées en parallèle, qui sont espacées les unes des autres par des nervures, et la membrane (18) est tendue au-dessus de la cavité et des nervures, de sorte qu'une première surface partielle de la membrane (18), qui se situe au-dessus de la cavité, est plus grande qu'une seconde surface partielle de la membrane (18) qui se situe au-dessus des nervures.

2. Séparateur (10) selon la revendication 1, sur lequel le corps moulé (12) est fabriqué à base d'un matériau thermiquement conducteur.

3. Séparateur (10) selon la revendication 1, sur lequel la membrane (18) est fixée par un corps de serrage (14) plan sur la surface du corps moulé (12).

4. Séparateur (10) selon la revendication 3, sur lequel le corps de serrage (14) présente une fente (16) allongée, dont la position et la forme sont prédéfinies de telle sorte que la fente (16) est opposée dans l'état fixé à la cavité allongée du corps moulé (12).

5. Séparateur (10) selon la revendication 4, sur lequel le corps de serrage (14) présente une épaisseur de l'ordre de 0,1 à 3 mm.

6. Séparateur (10) selon la revendication 1, sur lequel la surface de section du canal (24) se réduit depuis l'ouverture d'entrée (20) jusqu'à l'ouverture de sortie (22) d'un facteur de l'ordre de 2 à 40.

7. Séparateur (10) selon la revendication 1, sur lequel la surface de section du canal (24) est d'au moins 1 mm² sur l' ouverture d'entrée (20).

8. Séparateur (10) selon l'une quelconque des revendications précédentes, sur lequel la surface de section du canal (24) est au maximum de 100 mm² sur l'ouverture d'entrée (20) pour une hauteur maximale du canal (24) de 10 mm.

9. Séparateur (10) selon la revendication 1, sur lequel la membrane (18) est à base de polytétrafluor-éthylène (PTFE).

10. Séparateur (10) selon l'une quelconque des revendications précédentes, dans lequel une surface globale des parties de la membrane (18), qui sont mises à disposition pour la perméation, est de l'ordre de 8 à 60 cm².

11. Séparateur (10) selon l'une quelconque des revendications précédentes, sur lequel une profondeur du canal (24) dans la zone de l'ouverture d'entrée (20) va de 2 à 6 mm.

12. Séparateur (10) selon l'une quelconque des revendications précédentes, sur lequel la surface de section du canal (24) sur l' ouverture d'entrée (20) va de 4 à 40 mm².

13. Séparateur (10) selon l'une quelconque des revendications précédentes, sur lequel la surface de section du canal (24) sur l'ouverture de sortie (22) va de 0,01 à 10 mm².

14. Séparateur (10) selon la revendication 13, sur lequel la surface de section du canal sur l'ouverture de sortie (22) va de 0,05 à 1 mm².

15. Séparateur (10) selon l'une quelconque des revendications précédentes, sur lequel un rapport entre les surfaces de section sur l'ouverture d'entrée et l'ouverture de sortie est de l'ordre de 2:1 à 20:1.

16. Cellule de combustible à méthanol direct (DMFC) comprenant un séparateur selon l'une quelconque des revendications 1 à 15.

17. Ouverture portable dotée d'une cellule de combustible à méthanol direct (DMFC), qui contient un séparateur (10) selon l'une quelconque des revendications 1 à 15.

18. Utilisation d'un séparateur (10) selon l'une quelconque des revendications 1 à 15, comme séparateur d'air dans une cellule de combustible à méthanol direct (DMFC) pour un ordinateur portable.
